# EUROPEAN PATENT APPLICATION

(11) **EP 4 808 050 A1**
(43) Date of publication of application: **16.09.2026**
(21) Application number: 26163885.2
(22) Date of filing: 11.03.2026
(51) Int. Cl.: H04L 12/40, H04L 12/46, H04L 12/64, H04L 69/085, H04L 69/18, H01R 24/64

(54) **TWISTED PAIR ADAPTER**

(30) Priority: 14.03.2025 US 202519080262
(71) Applicant: Schneider Electric Buildings Americas, Inc., Carrollton Texas 75006 (US)
(72) Inventor: Johansson, Richard, Veberöd (SE); Nilsson, Henrik, Höllviken (SE); Stojcevski, Goran, Malmö (SE); O Neill, Peter, Amesbury, MA (US)
(74) Representative: Manitz Finsterwald Patent- und Rechtsanwaltspartnerschaft mbB

(57) **Abstract**

Examples of the disclosure include a converter device comprising a communication interface configured to be communicatively coupled to a communication network, the communication network being configured to support at least one first communication protocol, a network controller interface configured to be communicatively coupled to an incompatible network controller, the incompatible network controller being configured to support at least one second communication protocol different than the at least one first communication protocol, and converter logic configured to convert first communications received at the communication interface from the at least one first communication protocol to the at least one second communication protocol, and convert second communications received at the network controller interface from the at least one second communication protocol to the at least one first communication protocol.

## Description

### BACKGROUND

### 1. Field of the Disclosure

At least one example in accordance with the present disclosure relates generally to network systems.

### 2. Discussion of Related Art

Devices may be networked together in a network system. For example, an office building may have many different devices communicating on a network. These devices may include, for example, thermostats, heating and cooling equipment, light sensors, humidity sensors, and so forth. The devices may be connected to a communication network via a network controller, which routes communications to and from desired destinations.

### SUMMARY

Examples of the methods and systems discussed herein are not limited in application to the details of construction and the arrangement of components set forth in the following description or illustrated in the accompanying drawings. The methods and systems may be capable of implementation in other embodiments and of being practiced or of being carried out in various ways. Examples of specific implementations are provided herein for illustrative purposes and are not intended to be limiting. Acts, components, elements, and features discussed in connection with any one or more examples may be configured to operate and/or be implemented in a similar role in any other examples.

The phraseology and terminology used herein is for the purpose of description. References to examples, embodiments, components, elements, or acts of the systems and methods herein referred to in the singular may also embrace embodiments including a plurality. Similarly, references in plural to embodiments, components, elements, or acts may be implemented as a singularity. References in the singular or plural form may therefore not be intended to limit the presently disclosed systems or methods, their components, acts, or elements. The use herein of "including," "comprising," "having," "containing," "involving," and variations so forth, may encompass the items listed thereafter and equivalents thereof as well as additional items.

References to "or" may be construed as inclusive so that any terms described using "or" may indicate any of a single, more than one, and all of the described terms. For example, the phrase "at least one of A or B" may refer A and/or B-that is, A only, B only, or A and B together. In addition, in the event of inconsistent usages of terms between this document and documents incorporated herein by reference, the term usage in the incorporated documents is supplementary to this document. For irreconcilable differences, the term usage in this document controls.

According to at least one aspect of the present disclosure, a converter device is provided comprising a communication interface configured to be communicatively coupled to a communication network, the communication network being configured to support at least one first communication protocol, a network controller interface configured to be communicatively coupled to an incompatible network controller, the incompatible network controller being configured to support at least one second communication protocol different than the at least one first communication protocol, and converter logic configured to convert first communications received at the communication interface from the at least one first communication protocol to the at least one second communication protocol, and convert second communications received at the network controller interface from the at least one second communication protocol to the at least one first communication protocol.

In at least one example, the communication interface includes a twisted-pair communication interface. In at least one example, the at least one first communication protocol includes a serial data protocol. In at least one example, the at least one first communication protocol includes a serial data protocol. In at least one example, the network controller interface includes an Ethernet communication interface. In at least one example, the at least one second communication protocol includes at least one of a BACnet or Modbus protocol. In at least one example, the at least one second communication protocol includes at least one of a BACnet or Modbus protocol. In at least one example, the at least one first communication protocol includes a serial data protocol and the at least one second communication protocol includes at least one of a BACnet or Modbus protocol.

In at least one example, the device further includes mounting hardware. In at least one example, the device further includes at least one user interface element having a first configuration setting and a second configuration setting, wherein the first configuration setting configures the converter device as a master device and the second configuration setting configures the converter device as a terminal device. In at least one example, the communication interface is configured to be coupled, via the communication network, to at least one compatible network controller configured to concurrently communicate according to the at least one first communication protocol. In at least one example, the incompatible network controller is incompatible with the at least one first communication protocol.

According to at least one aspect of the disclosure, at least one non-transitory computer-readable medium storing thereon sequences of computer-executable instructions for operating a converter device including a communication interface configured to be communicatively coupled to a communication network and a network controller interface configured to be communicatively coupled to an incompatible network controller is provided, the sequences of computer-executable instructions including instructions that instruct at least one processor to convert first communications received at the communication interface from at least one first communication protocol to at least one second communication protocol different than the at least one first communication protocol; and convert second communications received at the network controller interface from the at least one second communication protocol different than the at least one first communication protocol to the at least one first communication protocol.

In at least one example, the at least one first communication protocol includes a serial data protocol. In at least one example, the at least one second communication protocol includes an Ethernet protocol. In at least one example, the incompatible network controller is incompatible with the at least one first communication protocol.

According to at least one aspect of the disclosure, a method of operating a converter device including a communication interface configured to be communicatively coupled to a communication network and a network controller interface configured to be communicatively coupled to an incompatible network controller, the method comprising receiving, at the communication interface, first communications structured according to at least one first communication protocol, converting the first communications received at the communication interface from the at least one first communication protocol to at least one second communication protocol different than the at least one first communication protocol, receiving, at the network controller interface, second communications structured according to the at least one second communication protocol, and converting the second communications received at the network controller interface from the at least one second communication protocol to the at least one first communication protocol.

In at least one example, the at least one first communication protocol includes a serial data protocol. In at least one example, the at least one second communication protocol includes an Ethernet protocol. In at least one example, the incompatible network controller is incompatible with the at least one first communication protocol.

### BRIEF DESCRIPTION OF THE DRAWINGS

Various aspects of at least one embodiment are discussed below with reference to the accompanying figures, which may not be drawn to scale. The figures are included to provide an illustration and a further understanding of the various aspects and embodiments, and are incorporated in and constitute a part of this specification, but are not intended as a definition of the limits of any particular embodiment. The drawings, together with the remainder of the specification, serve to explain principles and operations of the described and claimed aspects and embodiments. In the figures, each identical or substantially similar component that is illustrated in various figures may be represented by a like numeral. For purposes of clarity, not every component may be labeled in every figure. In the figures:
FIG. 1 illustrates a block diagram of a communication system according to an example;
FIG. 2 illustrates a block diagram of a communication system according to another example;
FIG. 3 illustrates a block diagram of a converter device according to an example;
FIG. 4A illustrates a perspective view of a converter device according to an example;
FIG. 4B illustrates a right-side view of a converter device according to an example;
FIG. 4C illustrates a left-side view of a converter device according to an example;
FIG. 4D illustrates a bottom view of a converter device according to an example;
FIG. 4E illustrates a top view of a converter device according to an example;
FIG. 4F illustrates a back view of a converter device according to an example; and
FIG. 5 illustrates a process of operating a converter device according to an example.

### DETAILED DESCRIPTION

As discussed above, network systems may include many different devices networked together via a communication network. The communication network may include a network of communications cables to transmit information. For example, many buildings may be wired with twisted pair cabling to transmit information between devices, such as sensor and actuators. As communications technologies evolve, previously installed communication networks (for example, twisted-pair-based communication networks) may not be compatible with contemporary communication devices. For example, a network controller that is configured to communicate via an Ethernet protocol may not be compatible with a twisted-pair-based communication network. However, because it may be costly, disruptive, and time-consuming to replace the previously installed communication networks (for example, to replace a twisted-pair-based network with an Ethernet-based network), site owners may prefer to simply use communication devices which are sub-optimal, but still compatible with legacy communication networks.

Examples of the disclosure provide a converter device that enables network communication between a communication device and communication network that would otherwise be incompatible with one another (for example, incapable of communicating with each other). For purposes of example rather than limitation, example converter devices are described which enable a communication device configured to communicate according to one hardware standard (for example, a network controller configured to communicate using Ethernet cabling) to communicate with a network configured to communicate according to another hardware standard (for example, a network configured to support twisted-pair cabling).

Example converter devices are physically coupled between the communication network and the incompatible communication device and include converter logic to translate communications from one communication standard (for example, serial data protocols such as Serial Peripheral Interface [SPI]) to another communication standard (for example, Internet Protocol [IP] standards such as BACnet or Modbus). Example converter devices disclosed herein therefore enable a communication device that would otherwise be incompatible with a communication network to communicate on that network. Accordingly, examples disclosed herein allow newly emerging communication devices to communicate on legacy communication networks without the costly, disruptive, and time-consuming work of updating the communication network as discussed above.

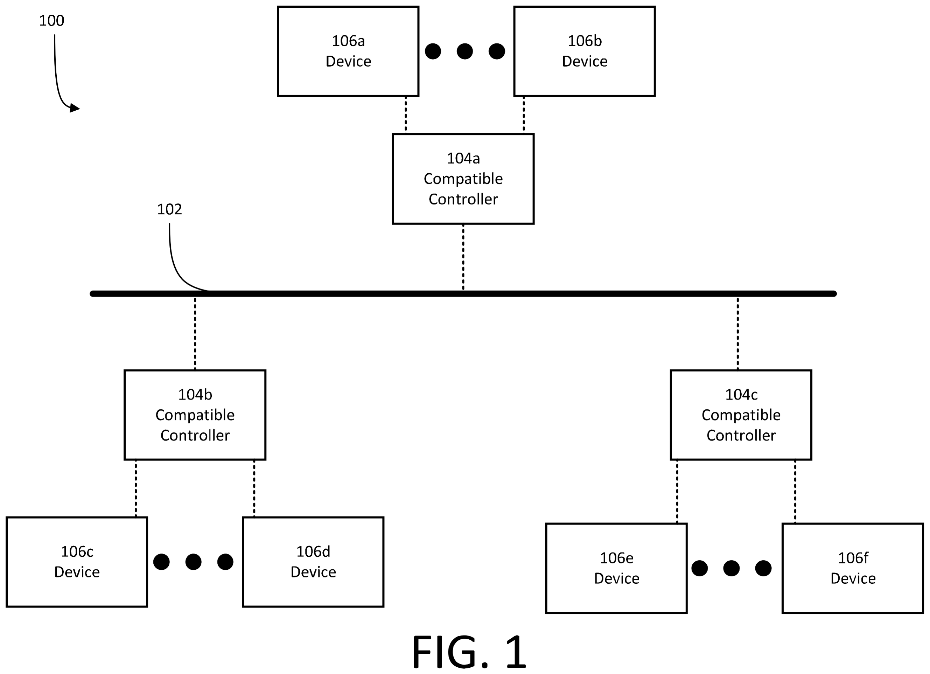

FIG. 1 illustrates a block diagram of a communication system 100 according to an example. The communication system 100 may include, for example, a communication network in an industrial or commercial building with a large number of networked devices (such as sensors, actuators, office equipment, lights, and so forth), though the principles of the disclosure are not limited to industrial or commercial buildings. The communication system 100 includes a communication network 102, an arbitrary number of communication controllers including a first communication controller 104a, a second communication controller 104b, and a third communication controller 104c (collectively, "communication controllers 104"), and an arbitrary number of networked devices including a first device 106a, a second device 106b, a third device 106c, a fourth device 106d, a fifth device 106e, and a sixth device 106f (collectively, "networked devices 106"). The networked devices 106 may include devices such as sensors (for example, temperature sensors, humidity sensors, light sensors, fluid sensors, and so forth), actuators (for example, door-access actuators, valves, pumps, HVAC equipment, and so forth), office equipment (for example, printers, coffee machines, water dispensers, and so forth), and/or other devices.

The communication controllers 104 may be configured to be physically and communicatively coupled to the communication network 102. For example, the communication controllers 104 may be coupled to the communication network 102 via twisted-pair communication cables and may communicate according to a serial data protocol. Each of the communication controllers 104 may be physically compatible with the communication network 102 (for example, by having a hardware interface that can connect directly to the communication network 102, such as a twisted-pair hardware interface) and is labeled accordingly in FIG. 1. For example, the communication network 102 may include or support a free-topology-based communication network, that is, a network that supports a singly terminated bus topology, a doubly terminated bus topology, a star topology, a loop topology, a combination thereof, and so forth. Each of the communication controllers 104 is further communicatively coupled to a respective set of networked devices. For example, the first communication controller 104a may be configured to be coupled to the first device 106a and the second device 106b, the second communication controller 104b may be configured to be coupled to the third device 106c and the fourth device 106d, and the third communication controller 104c may be configured to be coupled to the fifth device 106e and the sixth device 106f.

The communication controllers 104 may route communications between the communication network 102 and the respective set of networked devices 106 to which each of the communication controllers 104 is coupled. For example, the communication controllers 104 may route sensor data provided by the networked devices 106 to one or more other devices on the communication network 102, such as a site operator's computer terminal. In another example, the communication controllers 104 may route device commands from one or more other devices on the communication network 102, such as the site operator's computer terminal, to the networked devices 106. For example, the sensor data may include temperature information, and the commands may include a command to activate cooling equipment in response to the temperature information.

Accordingly, the communication system 100 may enable communication controllers to exchange information over the communication network 102. However, as discussed above, the communication network 102 may include communication cabling that is only compatible with certain communication devices. Although the communication controllers 104 are compatible with the communication network 102, other, more up-to-date communication controllers may not be. If a site operator wants to use network communication devices that do not include hardware compatible with the communication network 102, the site operator may be unable to do so or may need to replace the entire communication network 102 with communication cabling that is compatible with the preferred network communication devices.

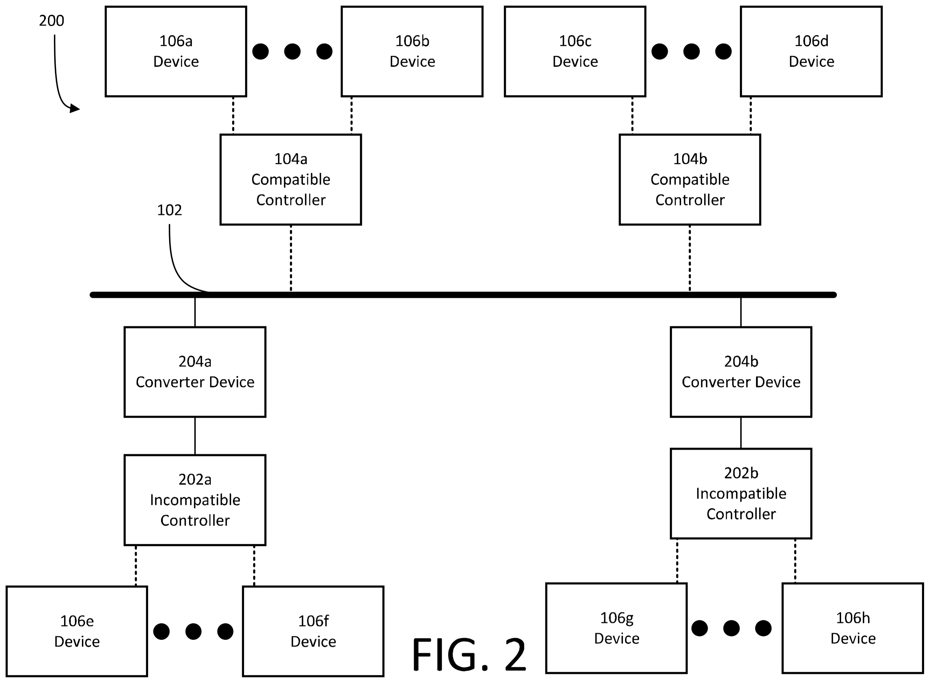

FIG. 2 illustrates a block diagram of a communication system 200 according to another example. The communication system 200 may be similar to the communication system 100, and like components are labeled accordingly. For example, the communication system 100 includes the communication network 102, the first communication controller 104a, the second communication controller 104b, and the networked devices 106a-106d. In addition, the communication system 200 includes an arbitrary number of communication controllers which are compatible with the networked devices 106 but which are not physically compatible with the communication network 102, such as a first incompatible communication controller 202a and a second incompatible communication controller 202b (collectively, "incompatible controllers 202"). The communication system 200 further includes an arbitrary number of converter devices including a first converter device 204a and a second converter device 204b (collectively, "converter devices 204").

The communication network 102 is communicatively and physically coupled to the first communication controller 104a, the second communication controller 104b, the first converter device 204a, and the second converter device 204b. The communication network 102 may be coupled to additional devices which are not illustrated for clarity. The first communication controller 104a is coupled to the communication network 102 at a first interface, and is coupled to each of the networked devices 106a, 106b at respective second connections. The second communication controller 104b is coupled to the communication network 102 at a first interface, and is coupled to each of the networked devices 106c, 106d at respective second connections.

The converter devices 204a, 204b are configured to be coupled to the communication network 102 at respective first interfaces, and are configured to be coupled to the incompatible communication controllers 202a, 202b, respectively, at respective second interfaces. Each of the incompatible communication controllers 202a, 202b is coupled to one of the converter devices 204a, 204b, respectively, at a respective first connection, and is configured to be coupled to a respective set of the networked devices 106 at respective second connections.

In some examples, as discussed above, the communication network 102 may be physically configured for twisted-pair communication. The first communication controller 104a and the second communication controller 104b may be compatible for twisted-pair-based communication, and can thus connect directly to the communication network 102. Conversely, the incompatible controllers 202 may be configured with a different hardware interface (for example, configured for Ethernet-based communication cabling) and therefore lack the hardware components needed to connect directly to the communication network 102.

As discussed in greater detail below, the converter devices 204 bridge the communication gap by coupling to the communication network 102 via one hardware interface (for example, a twisted-pair-based interface) and to a respective one of the incompatible communication controllers 204 via another hardware interface (for example, an Ethernet-based interface). The converter devices 204 may further convert communications exchanged by the communication network 102 and the converter devices 204 between communication protocols to enable the converter devices 204 to communicate on the communication network 102. Accordingly, the converter devices 204 enable communication controllers 202, which would otherwise be incompatible with the communication network 102, to nonetheless send and receive communications over the communication network 102. Furthermore, controllers which are compatible with the communication network 102 (for example, the compatible controllers 104a, 104b) may communicate with the communication network 102 concurrently with the converter devices 204a, 204b enabling communication with the communication network 102. That is, the communication network 102 concurrently supports the incompatible controllers 202a, 202b and the compatible controllers 104a, 140b being able to communicate with the communication network 102. The incompatible controllers 202a, 202b may thus be concurrently communicatively coupled to the compatible controllers 104a, 104b via the communication network 102.

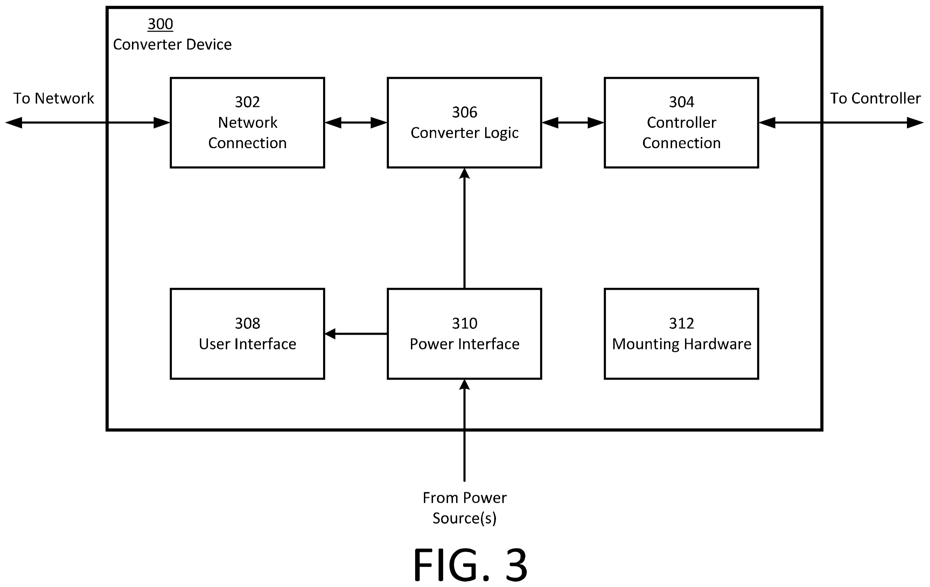

FIG. 3 illustrates a block diagram of a converter device 300 according to an example. For example, the converter device 300 may be an example of the converter devices 204a, 204b. The converter device 300 includes at least one network interface connection 302 ("network connection 302"), at least one controller interface connection 304 ("controller connection 304"), converter logic 306, one or more user interface components 308 ("user interface 308"), at least one power interface connection 310 ("power interface 310"), and mounting hardware 312.

The network connection 302 is configured to be coupled to a communication network, such as the communication network 102, at a first connection, and is configured to be coupled to the converter logic 306 at a second connection. For example, the network connection 302 may include one or more hardware ports configured to couple to hardware communication cabling (for example, the network connection 302 may include a pair of hardware ports configured to be coupled to twisted-pair communication cabling). The controller connection 304 is configured to be coupled to a communication controller, such as one of the incompatible communication controllers 202a, 202b, at a first connection, and is coupled to the converter logic 306 at a second connection. For example, the controller connection 304 may include at least one hardware port configured to couple to hardware communication cabling (for example, the controller connection 304 may include an Ethernet port). The converter logic 306 is coupled to the network connection 302 at a first connection, the controller connection 304 at a second connection, and the power interface connection 310 at a power connection (either directly or via one or more power-conditioning devices).

The user interface 308 is coupled to the power interface connection 310 at a power connection (either directly or via one or more power-condition devices), and includes user interface elements that provide outputs to the user and/or receive inputs from the user. For example, the user interface 308 may include one or more lights configured to be illuminated to convey certain information, and/or may include one or more buttons or switches to enable a user to select settings on the converter device 300. The power interface 310 is coupled to the converter logic 306 at a first connection, is coupled to the user interface 308 at a second connection, and is configured to be coupled to, and receive power from, at least one power source at an input connection. The mounting hardware 312 is configured to be coupled to equipment on which to mount the converter device 300. For example, the mounting hardware 312 may include components configured to attach the converter device 300 to a DIN rail, to be screwed directly into a mounting plane, and so forth.

The converter device 300 is configured to enable a network controller coupled to the controller connection 304 to communicate over a communication network coupled to the network connection 302. The converter logic 306 may be configured to receive, via the controller connection 304, communications from a communication controller. The converter logic 306 converts the communication from the communication protocol used by the communication controller (for example, a BACnet or Modbus protocol) to a communication protocol used by the communication network 102 (for example, a serial-communication protocol). The converter logic 306 then provides the converted communication to the communication network 102 via the network connection 302.

Similarly, the converter logic 306 may be configured to receive, via the network connection 302, communications from the communication network 102. The converter logic 306 converts the communication from the communication protocol used by the communication network 102 (for example, a serial-communication protocol) to a communication protocol used by the communication controller (for example, a BACnet or Modbus protocol). The converter logic 306 then provides the converted communication to the communication controller via the controller connection 304.

In various examples, the converter logic 306 may include one or more controllers and memory and/or storage. The memory and/or storage may store conversion instructions which, when executed by the one or more controllers, enable the one or more controllers to convert communications between the connections 302, 304. The power interface 310 may be configured to receive power from at least one power source and provide power to the converter logic 306 and the user interface 308. In some examples, the power interface 310 may include power-conditioning circuitry to regulate power provided to the converter logic 306 and/or user interface 308. In at least one example, the power interface 310 may include hardware ports for a positive-line connection, a negative-line connection, and one or more return connections.

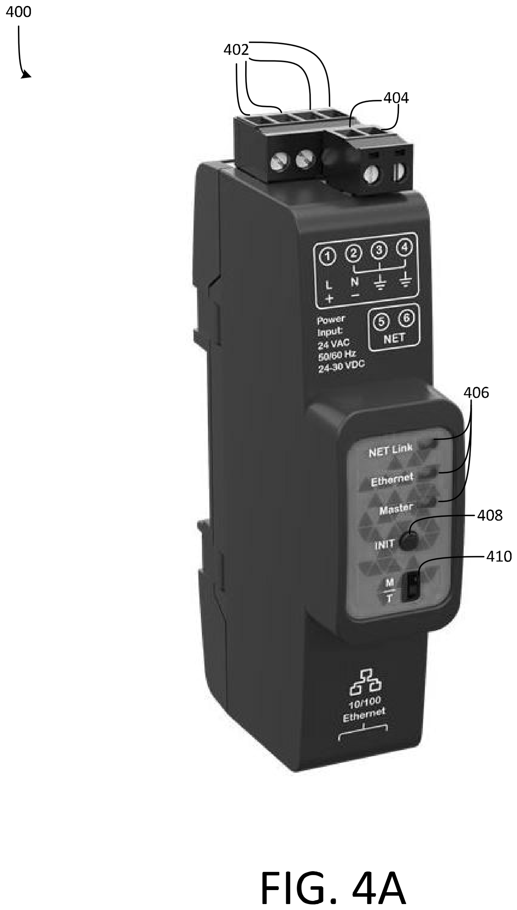

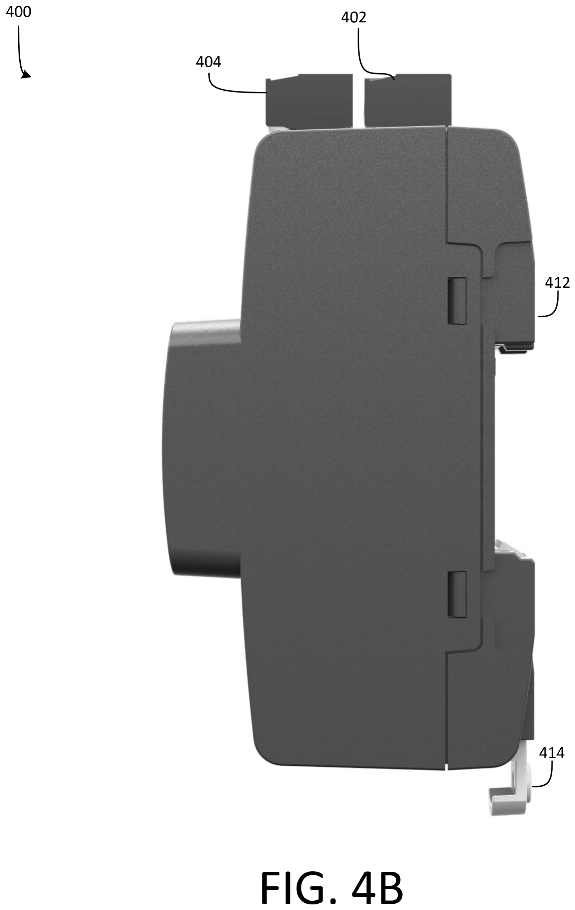

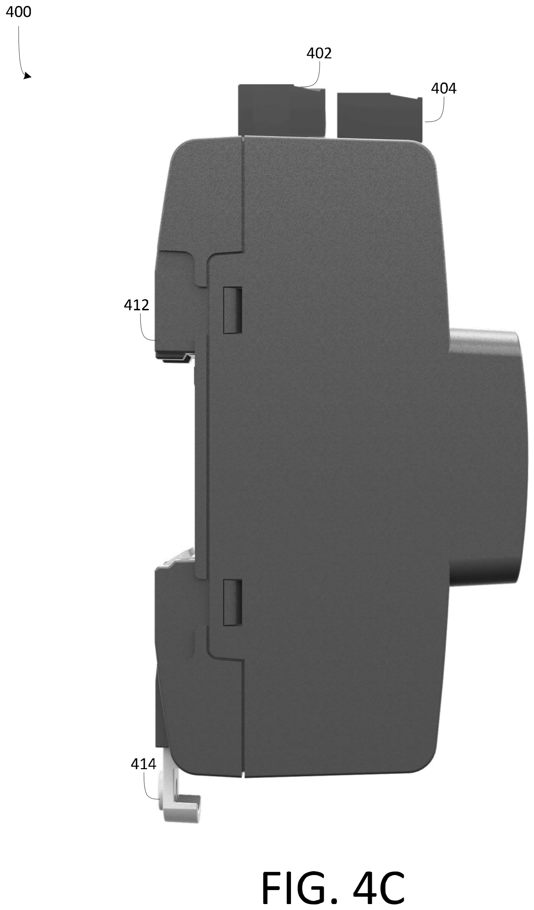

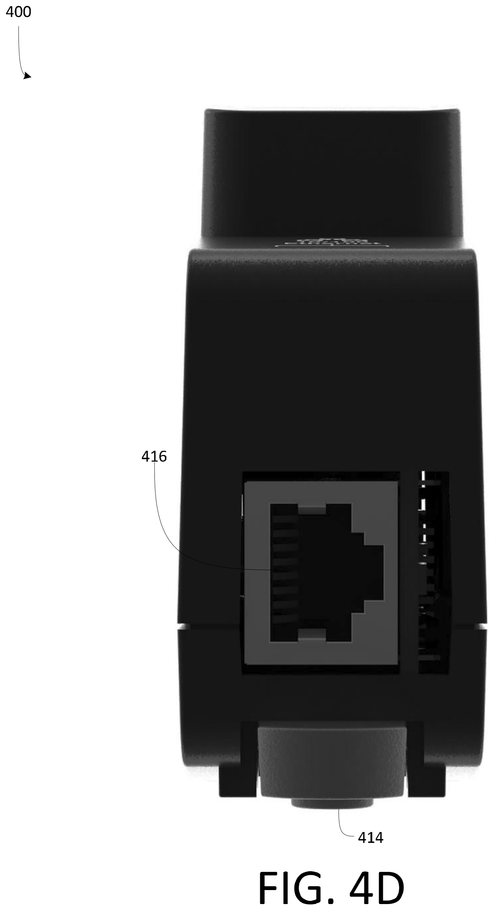

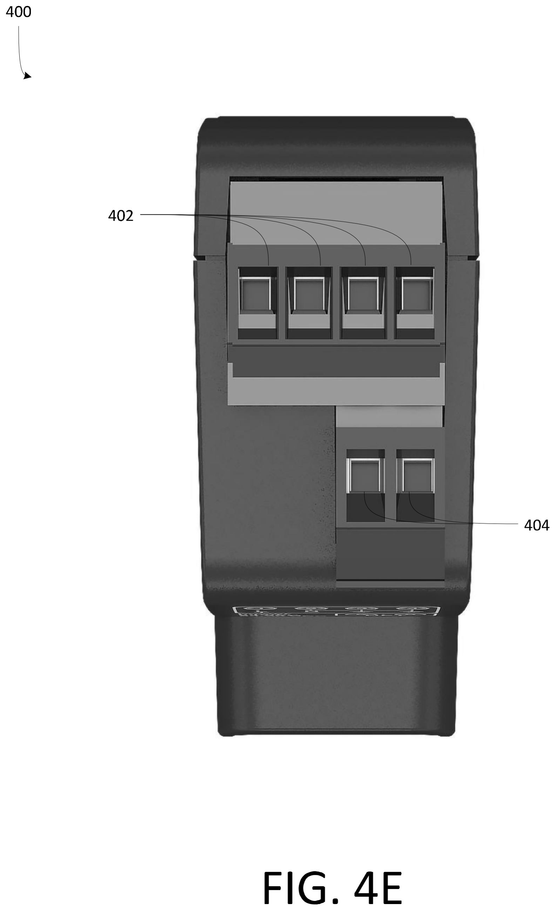

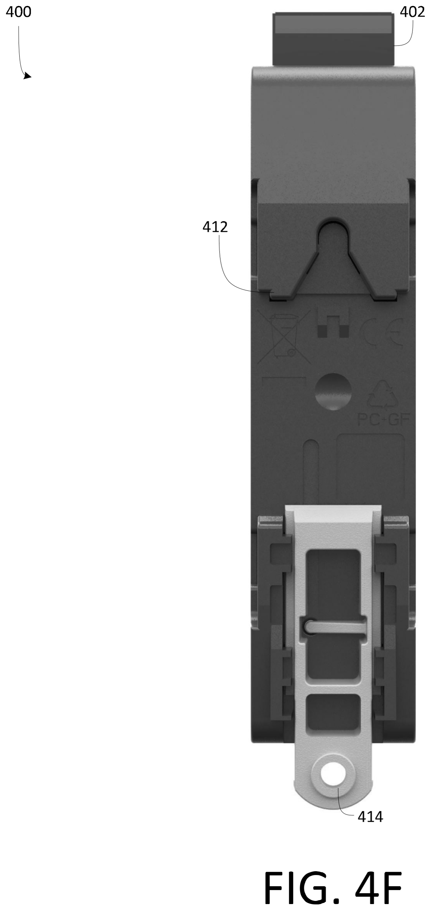

FIGS. 4A-4F illustrate various views of a converter device 400 according to an example. FIG. 4A illustrates a front perspective view of the converter device 400. FIG. 4B illustrates a right-side view of the converter device 400. FIG. 4C illustrates a left-side view of the converter device 400. FIG. 4D illustrates a bottom view of the converter device. FIG. 4E illustrates a top view of the converter device. FIG. 4F illustrates a back view of the converter device.

The converter device 400 may be an example of the converter device 300. In particular, the converter device 400 may depict an example of the converter device 300 which is configured to be coupled to a twisted-pair-based communication network, and to an Ethernet-based network controller. The converter device 300 is not limited to these communication standards and may be implemented in connection with other communication standards in other examples.

The converter device 400 includes input-power connections 402, one or more communication-network connections 404 ("network connections 404"), one or more user-interface output light-emitting-diodes 406 ("output LEDs"), at least one user-interface button 408 ("button 408"), at least one user-interface switch 410 ("switch 410"), a rail latch 412, a keyhole mount 414, and at least one network-controller connection 416 ("controller connection 416").

The input-power connections 402 may illustrate an example of the power interface 310. In the illustrated example, the input-power connections 402 include a positive input connection, a negative input connection, and two return connections (for example, ground connections). Each of the input-power connections 402 may include an opening to receive a conductor and may be capable of adjusting the width of the opening using a screwdriver to clamp the conductor within the opening.

The network connections 404 may illustrate an example of the network connection 302. In the illustrated example, the network connections 404 include a first network connection and a second network connection. Each of the network connections 404 may be configured to receive a respective conductor of a twisted-pair-based communication cable (for example, a pair of power line communication [PLC] conductors). Each of the network connections 404 may include an opening to receive a conductor and may be capable of adjusting the width of the opening using a screwdriver to clamp the conductor within the opening.

The output LEDs 406, the button 408, and the switch 410 may be example components of the user interface 308. In the illustrated example, the output LEDs 406 may include three LEDs to output respective information to a user. For example, a first LED may convey information about the connection status of the network connections 404, such as PLC information which may include connection-status information indicating whether a communication connection has been established with a PLC network. A second LED may convey information about the connection status of the controller connection 416, such as Ethernet information which may include connection-status information indicating whether a communication connection has been established with a network controller.

A third LED may convey information about whether the device 400 is a master device or a terminal device. In various examples, a communication network (such as the communication network 102) may be configured to support a single master device. The third LED may output one type of information (for example, a color, a solid light, a blinking pattern, and so forth) to indicate that the device 400 is a master device, and may output a different type of information (for example, a different color, a different blinking pattern, and so forth) to indicate that the device 400 is a terminal device. A user may quickly identify an issue if multiple devices on a network are master devices (which may be a disallowed state) by visually identifying multiple output LEDs 406 indicating that the devices are master devices. For example, if two devices' LEDs are red (indicating that the device is a master device), and the remaining devices' LEDs are green (indicating that the device is a terminal device), a user may be quickly identify the two red LEDs are presenting an issue.

The button 408 may include an initialization button which, when actuated by a user, causes the device 400 to reboot. The switch 410 may include a master/terminal switch which, when actuated by a user, designates the device 400 between a first configuration setting (for example, to configure the device 400 as a master device) and a second configuration setting (for example, to configure the device 400 as a terminal device). A master device may control the flow of communications sent by terminal devices on a communication network.

The rail latch 412 and the keyhole mount 414 may illustrate examples of the mounting hardware 312. The rail latch 412 may be configured to latch onto a mounting rail, such as a DIN rail, to mount the device 400 in a desired position (for example, in an equipment rack). The keyhole mount 414 may be configured to receive a fastener, such as a screw, to fasten the device 400 in a desired position (for example, on a surface with or without a mounting rail).

The controller connection 416 may illustrate an example of the controller connection 304. In the illustrated example, the controller connection 416 may include a network port configured to receive an Ethernet-based communication cable. In at least one example, the controller connection 416 may include an RJ45 port.

In various examples, the rail latch 412 and/or keyhole mount 414 may enable a user to mount the device 400 at a desired location, such as within an equipment rack. The user may connect the input-power connections 402 to power conductors to provide power to the device 400. The user may connect the network connections 404 to a communication network via, for example, twisted-pair communication cables. The user may use a screwdriver to tighten each of the connections 402, 404. The user may connect the controller connection 416 to a network controller via, for example, an Ethernet cable. The user may use the switch 410 to designate the device 400 as a master device or terminal device.

In various examples, if a communication connection is properly established at the network connections 404 and the controller connection 416 to a communication network and network controller, respectively, the output LEDs 406 may provide output information indicating that the communication connections have been properly established (such as by being illuminated with a solid green light). If a communication connection is not properly established, the output LEDs 406 may output different information indicating that the connections have not been properly established (such as by being illuminated with a solid or blinking red light). The output LEDs 406 may also output information indicative of whether the device 400 is a master or terminal device. If a user detects any issues with the device 400, such as a faulty communication connection, the user may reboot the device 400 by toggling the button 408. Once the device 400 is set up, the device 400 may begin monitoring for communications at the connections 404, 416.

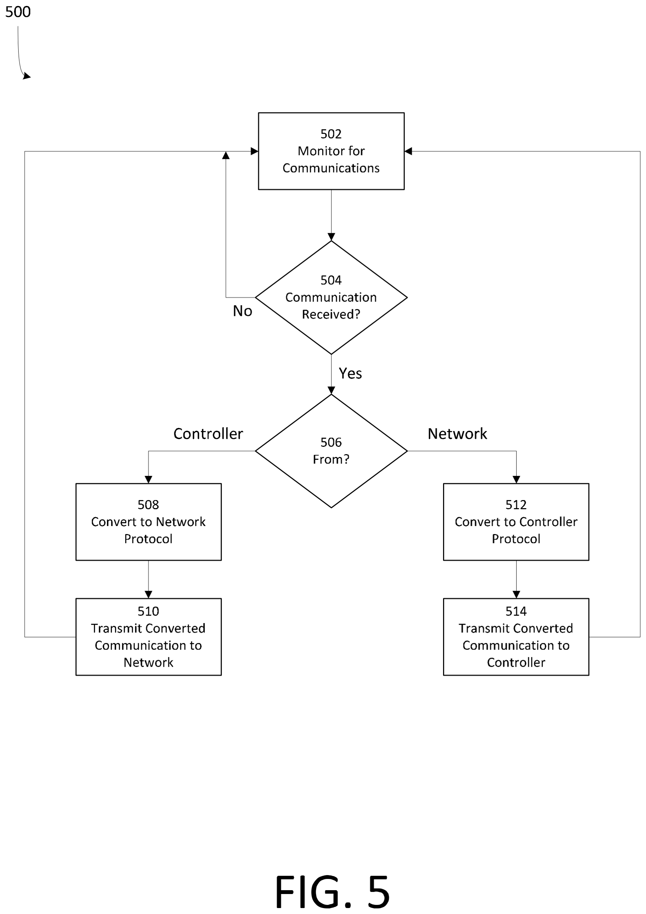

FIG. 5 illustrates a process 500 of operating the device 400 according to an example. The device 400 may execute the process 500 after setting up the device 400, such as by setting the device 400 up in an equipment rack.

At act 502, the device 400 monitors for communications at either the network connections 404 or the controller connection 416. For example, the device 400 may receive communications from a communication network, such as the communication network 102, at the network connections 404. Such a communication may include, for example, a command to be sent to an actuator communicatively coupled to the device 400 (for example, via a network controller). The device 400 may receive communications from a network controller, such as the incompatible communication controllers 202a, 202b, at the controller connection 416. Such a communication may include, for example, sensor information sensed by a sensor coupled to the network controller.

At act 504, the device 400 determines whether any communications have been received. If not (504 NO), then the process 500 returns to act 502. If so (504 YES), then the process 500 continues to act 506.

At act 506, a determination is made as to where the received command originated from. If the command was received at the controller connection 416 from a network controller (506 CONTROLLER), then the process 500 continues to act 508. Otherwise, if the command was received at the network connections 404 from a communication network (506 NETWORK), then the process 500 continues to act 510.

At act 508, the device 400 converts the communication received at the controller connection 416 from the network controller's communication protocol to the communication protocol utilized by the communication network to which the device 400 is coupled via the network connections 404. For example, act 508 may include the device 400 converting communications structured according to an Ethernet-based communication protocol (for example, IEEE 802.3) received at the controller connection 416 to a PLC-based communication protocol (for example, HDPLC). The device 400 may include converter logic (which may be an example of the converter logic 306) to execute the conversion from one communication standard to the other. For example, the converter logic 306 may include a system-on-chip (SoC) configured to perform the communication-protocol conversion.

At act 510, the device 400 transmits the converted communication to the communication network via the network connections 402. For example, the device's 400 converter logic may transmit the converted communication to the network connections 402 after converting the communication. The process 500 then returns to act 502.

Returning to act 506, if the device 400 receives a communication from the communication network at the network connections 402 (506 NETWORK), then the process 500 continues to act 512.

At act 512, the device 400 converts the communication received at the network connections 402 from the communication network's communication protocol to the communication protocol utilized by the network controller to which the device 400 is coupled via the controller connection 416. For example, act 512 may include the device 400 converting communications structured according to a PLC-based communication protocol to an Ethernet-based communication protocol. The converter logic of the device 400 (for example, a SoC) may execute the conversion from one communication standard to the other.

At act 514, the device 400 transmits the converted communication to the network controller via the controller connection 416. For example, the device's 400 converter logic may transmit the converted communication to the controller connection 416 after converting the communication. The process 500 then returns to act 502.

In various examples, therefore, the device 400 may enable a network controller which is otherwise incompatible with a communication network to exchange communications with that communication network. As discussed above, the communication network may be coupled to a combination of legacy network controllers (for example, network controllers configured to communicate according to a twisted-pair-based standard) coupled directly to the communication network, and otherwise incompatible network controllers (for example, network controllers configured to communicate according to an Ethernet-based standard) coupled indirectly to the communication network via, for example, the device 400. An arbitrary number of controllers may be coupled to the communication network in various examples (though in some examples, a communication network may be configured to support up to a certain number of communication nodes, such as 64 communication nodes).

Various control logic, such as the logic 306, may execute various operations discussed above. The logic 306 may also execute one or more instructions stored on one or more non-transitory computer-readable media, which the logic 306 may include and/or be coupled to, which may result in manipulated data. The non-transitory computer-readable media may include memory and/or storage. In some examples, the logic 306 may include one or more processors, SoCs, or other types of controllers. In one example, the logic 306 is or includes at least one processor. In another example, the logic 306 performs at least a portion of the operations discussed above using an application-specific integrated circuit tailored to perform particular operations in addition to, or in lieu of, a processor. As illustrated by these examples, examples in accordance with the present disclosure may perform the operations described herein using many specific combinations of hardware and software and the disclosure is not limited to any particular combination of hardware and software components. Examples of the disclosure may include a computer-program product configured to execute methods, processes, and/or operations discussed above. The computer-program product may be, or include, one or more controllers and/or processors configured to execute instructions to perform methods, processes, and/or operations discussed above.

Having thus described several aspects of at least one embodiment, it is to be appreciated various alterations, modifications, and improvements will readily occur to those skilled in the art. Such alterations, modifications, and improvements are intended to be part of, and within the spirit and scope of, this disclosure. Accordingly, the foregoing description and drawings are by way of example only.

## Claims

1. A converter device comprising:
a communication interface configured to be communicatively coupled to a communication network, the communication network being configured to support at least one first communication protocol;
a network controller interface configured to be communicatively coupled to an incompatible network controller, the incompatible network controller being configured to support at least one second communication protocol different than the at least one first communication protocol; and
converter logic configured to
convert first communications received at the communication interface from the at least one first communication protocol to the at least one second communication protocol, and
convert second communications received at the network controller interface from the at least one second communication protocol to the at least one first communication protocol.

2. The converter device of claim 1, wherein the communication interface includes a twisted-pair communication interface.

3. The converter device of claim 1 or 2, wherein the at least one first communication protocol includes a serial data protocol.

4. The converter device of any one of the preceding claims, wherein the network controller interface includes an Ethernet communication interface.

5. The converter device of any one of the preceding claims, wherein the at least one second communication protocol includes at least one of a BACnet or Modbus protocol.

6. The converter device of any one of the preceding claims, further comprising mounting hardware.

7. The converter device of any one of the preceding claims, further comprising at least one user interface element having a first configuration setting and a second configuration setting, wherein the first configuration setting configures the converter device as a master device and the second configuration setting configures the converter device as a terminal device.

8. The converter device of any one of the preceding claims, wherein the communication interface is configured to be coupled, via the communication network, to at least one compatible network controller configured to concurrently communicate according to the at least one first communication protocol.

9. The converter device of claim 8, wherein the incompatible network controller is incompatible with the at least one first communication protocol.

10. At least one non-transitory computer-readable medium storing thereon sequences of computer-executable instructions for operating a converter device including a communication interface configured to be communicatively coupled to a communication network and a network controller interface configured to be communicatively coupled to an incompatible network controller, the sequences of computer-executable instructions including instructions that instruct at least one processor to:
convert first communications received at the communication interface from at least one first communication protocol to at least one second communication protocol different than the at least one first communication protocol; and
convert second communications received at the network controller interface from the at least one second communication protocol different than the at least one first communication protocol to the at least one first communication protocol.

11. The at least one non-transitory computer-readable medium of claim 10, wherein the at least one first communication protocol includes a serial data protocol.

12. The at least one non-transitory computer-readable medium of claim 10, wherein the at least one second communication protocol includes an Ethernet protocol.

13. The at least one non-transitory computer-readable medium of claim 10, wherein the incompatible network controller is incompatible with the at least one first communication protocol.

14. A method of operating a converter device including a communication interface configured to be communicatively coupled to a communication network and a network controller interface configured to be communicatively coupled to an incompatible network controller, the method comprising:
receiving, at the communication interface, first communications structured according to at least one first communication protocol;
converting the first communications received at the communication interface from the at least one first communication protocol to at least one second communication protocol different than the at least one first communication protocol;
receiving, at the network controller interface, second communications structured according to the at least one second communication protocol; and
converting the second communications received at the network controller interface from the at least one second communication protocol to the at least one first communication protocol.

15. The method of claim 14, wherein the at least one first communication protocol includes a serial data protocol and/or
wherein the at least one second communication protocol includes an Ethernet protocol and/or
wherein the incompatible network controller is incompatible with the at least one first communication protocol.
